(19) Europäisches Patentamt
European Patent Office
Office européen des brevets

(11) **EP 1 411 231 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(51) Int Cl.:
*F02D 41/14* *(2006.01)*     *F02D 41/02* *(2006.01)*

(21) Anmeldenummer: **03090322.3**

(22) Anmeldetag: **29.09.2003**

(54) **Verfahren sowie Vorrichtung zur Steuerung einer magerlauffähigen Verbrennungskraftmaschine**

Method and device for controlling a combustion engine capable of lean running

Procédé et dispositif de commande d'un moteur pouvant fonctionner avec un mélange pauvre

(84) Benannte Vertragsstaaten:
**AT BE BG CH CY CZ DE DK EE ES FI FR GB GR HU IE IT LI LU MC NL PT RO SE SI SK TR**

(30) Priorität: **14.10.2002 DE 10248527**

(43) Veröffentlichungstag der Anmeldung:
**21.04.2004 Patentblatt 2004/17**

(73) Patentinhaber: **Volkswagen Aktiengesellschaft**
**38436 Wolfsburg (DE)**

(72) Erfinder: **Pott, Ekkehard, Dr.**
**38518 Gifhorn (DE)**

(74) Vertreter: **Schneider, Henry et al**
**Anwaltskanzlei**
**Gulde Hengelhaupt Ziebig & Schneider**
**Wallstrasse 58/59**
**10179 Berlin (DE)**

(56) Entgegenhaltungen:
**EP-A2- 1 247 963        WO-A-01/06105**
**WO-A-99/35386**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren sowie eine Vorrichtung zur Steuerung einer magerlauffähigen Verbrennungskraftmaschine mit den Merkmalen der Oberbegriffe der unabhängigen Ansprüche 1 und 17.

Es ist bekannt, zur Nachbehandlung von Abgasen von Verbrennungskraftmaschinen das Abgas katalytisch zu reinigen. Dazu wird das Abgas über mindestens einen Katalysator geleitet, der eine Konvertierung einer oder mehrerer Schadstoffkomponenten des Abgases zu unbedenklichen oder weniger umweltrelevanten Produkten vornimmt. Es sind unterschiedliche Arten von Katalysatoren bekannt. Oxidationskatalysatoren fördern die Oxidation von unverbrannten Kohlenwasserstoffen (HC) und Kohlenmonoxid (CO), während Reduktionskatalysatoren eine Reduzierung von Stickoxiden ($NO_X$) des Abgases unterstützen. Ferner werden 3-Wege-Katalysatoren verwendet, um die Konvertierung der drei vorgenannten Komponenten (HC, CO, $NO_X$) gleichzeitig zu katalysieren. Daneben sind auch Speicherkatalysatoren, beispielsweise $NO_X$-Speicherkatalysatoren, bekannt. Diese werden bei der Abgasreinigung von Verbrennungskraftmaschinen eingesetzt, die aus Gründen einer Verbrauchsoptimierung über möglichst große Lastbereiche, insbesondere im Niedrig- oder Teillastbereich, in einem verbrauchsgünstigen Magerbetrieb gefahren werden, das heißt mit einem sauerstoffreichen Abgas mit $\lambda > 1$ betrieben werden, wobei in hohem Maße Stickoxide $NO_X$ entstehen. Die Stickoxide $NO_X$ können bei einer katalytischen oxidativen Umsetzung von unverbrannten Kohlenwasserstoffen HC und Kohlenmonoxid CO nicht vollständig zu umweltneutralem Stickstoff umgesetzt werden. Zur Abhilfe werden vorgenannte $NO_X$-Speicherkatalysatoren in den Abgaskanälen von Verbrennungskraftmaschinen angeordnet, die in mageren Betriebsphasen $NO_X$ als Nitrat einlagern. Der $NO_X$-Speicherkatalysator muss in wiederkehrenden Abständen durch Umschaltung in einen fetten oder stöchiometrischen Betrieb ($\lambda \leq 1$) der Verbrennungskraftmaschine regeneriert werden.

Ein gemeinsames Problem praktisch aller Katalysatorsysteme, insbesondere auch von $NO_X$-Speicherkatalysatoren, stellt die starke Abhängigkeit einer Speicher- und/oder Konvertierungsaktivität der Katalysatoren von der Katalysatortemperatur dar. So weisen $NO_X$-Speicherkatalysatoren einen Arbeitstemperaturbereich von etwa 250...550 °C, in dem in einem mageren Betriebsmodus Stickoxide mit hohem Wirkungsgrad eingelagert werden können. Bei Überschreitung dieses Temperaturfensters bricht der Wirkungsgrad der Einlagerung schnell ein, so dass geltende Abgasvorschriften nicht eingehalten werden können, wie zum Beispiel die EU IV-Norm. So laufen unterhalb dieses Temperaturfensters die Speicher- und Regenerationsreaktionen mit zu geringen Reaktionsgeschwindigkeiten ab, während oberhalb des Temperaturfensters die thermisch instabilen Nitrate zerfallen, so dass keine hinreichende Speicherrate vorliegt. Daher wird bei gemessenem oder prognostiziertem Einbrechen des $NO_X$-Speicherwirkungsgrades der Magerbetrieb verboten. Dieses Verbot kann unterbleiben, wenn die ermittelten $NO_X$-Emissionen stromauf des $NO_X$-Speicherkatalysators unterhalb einer vorgebbaren streckenbezogenen Emissionsschwelle liegen, wie in der DE 101 52 670.9 beschrieben. In diesem Falle kann ein 100%-$NO_X$-Schlupf in Kauf genommen werden, da dieser Wert immer noch unter den gesetzlichen Emissionsgrenzwerten liegt. Bei nur geringfügigem Überschreiten des streckenbezogenen Emissionsschwellwertes wird der Magerbetrieb hart gesperrt, wodurch sich nachteilhafterweise Verbrauchsnachteile ergeben.

Aufgabe der vorliegenden Erfindung ist es daher, ein Verfahren zur Steuerung einer magerlauffähigen Verbrennungskraftmaschine bereitzustellen, das die Aufrechterhaltung möglichst ausgedehnter Magerbetriebsphasen bei Einhaltung strenger Abgasnormen gestattet und gleichzeitig gegenüber dem Stand der Technik verbrauchsoptimiert ist. Es soll ferner eine zur Durchführung des Verfahrens geeignete Vorrichtung zur Verfügung gestellt werden.

Diese Aufgabe wird durch ein Verfahren sowie eine Vorrichtung mit den im Anspruch 1 beziehungsweise Anspruch 17 genannten Merkmalen gelöst.

Gemäß des erfindungsgemäßen Verfahrens ist es vorgesehen, dass ein Magerbetrieb des Verbrennungsmotors auch bei Überschreiten eines streckenbezogenen Emissionsschwellwertes zumindest temporär zugelassen wird, sofern im streckenbezogenen Mittel ein vorgebbarer Emissionsschwellwert eingehalten wird. Dieser Emissionsschwellwert wird in der Regel durch gesetzliche Vorgaben, die bestimmte Emissionsgrenzen vorschreiben, bedingt. Damit wird ein "Toggle-Mode" zwischen Mager- und Homogenbetrieb des Verbrennungsmotors gefahren, dessen Homogenanteile umso höher sind, je weiter die streckenbezogenen Emissionen, vorzugsweise $NO_X$-Emissionen, vor vorzugsweise dem Speicherkatalysator den Emissionsschwellwert überschreiten. Die aktuelle streckenbezogene Emission wird gemessen beziehungsweise in Abhängigkeit aktueller Betriebsparameter der Verbrennungskraftmaschine, insbesondere von einer Drehzahl und/oder einer Last und/oder einer Fahrzeuggeschwindigkeit, ermittelt.

Nach einer bevorzugten Ausführungsform des Verfahrens wird wie folgt vorgegangen:

-   Durch eine Routine wird die aktuelle Temperatur des $NO_X$-Speicherkatalysators abgeprüft. Sobald diese einen oberen Schwellwert überschreitet, das heißt aus dem Temperaturfenster des $NO_X$-Speicherkatalysators heraustritt, wird das Verfahren initiiert.

-   In einem ersten Schritt wird die aktuelle streckenbezogene $NO_X$-Emission NOXS durch einen vorgebbaren streckenbezogenen Emissionsschwellwert NOXMX dividiert.

- Von dem so ermittelten Faktor NOXS/NOXMX wird in einem zweiten Schritt ein Wert HAW subtrahiert wird, wodurch sich gemäß nachstehender Formel (I) ein Wert ZAH ergibt:

$$ZAH = NOXS/NOXMX - HAW. \tag{I}$$

Dabei ist ZAH der Zeitanteil des Homogenbetriebes relativ zum Magerbetrieb. HAW beschreibt einen Homogen-Anpassungswert, der im Idealfall (100 % $NO_X$-Konvertierung im Homogenbetrieb) bei genau 1 und im Realfall (unter Berücksichtigung suboptimaler Konvertierungsraten sowie kleinem $NO_X$-Schlupf bei Betriebsartenumschaltungen) bei 0,98...0,9, in ungünstigen Fällen auch noch niedriger, bis 0,5, liegt.

- In einem dritten Schritt wird ein Mindest-Zeitraster MZR definiert, in dem zwischen den Betriebsarten gewechselt werden soll, um den emissions- und fahrkomfortungünstigen Betriebsartenwechsel nicht zu häufig durchführen zu müssen. Ideal ist hier eine Mindest-Zeit von 5 bis 30 Sekunden, optimal 8 bis 20 Sekunden.

- In einem vierten Schritt wird geprüft, ob der Zeitanteil des Homogenbetriebes relativ zum Magerbetrieb ZAH größer, gleich oder kleiner als 1 ist. Falls der Zeitanteil des Homogenbetriebes relativ zum Magerbetrieb ZAH genau gleich 1 ist, wird genau im Mindest-Zeitraster zwischen Homogen- und Magerbetrieb gewechselt. Ist der Zeitanteil des Homogenbetriebes relativ zum Magerbetrieb ZAH größer als 1, so wird für die Dauer des Mindest-Zeitrasters der Magerbetrieb freigegeben und anschließend für die Zeitdauer (MZR x ZAH) der Homogenbetrieb vorgeschrieben. Ist der Zeitanteil des Homogenbetriebes relativ zum Magerbetrieb ZAH kleiner als 1, so kann ebenfalls genau im Mindest-Zeitraster zwischen Homogen- und Magerbetrieb gewechselt werden. Alternativ wird für die Dauer des Mindest-Zeitrasters MZR der Homogenbetrieb vorgeschrieben und anschließend für die Zeitdauer MZR/ZAH der Magerbetrieb freigegeben.

- Wird ein vorgebbarer oberer ZAH-Schwellwert ZAHMX überschritten, so ist der Mageranteil im Toggle-Modus so klein, dass keine nennenswerten Verbrauchsvorteile mehr erreicht werden können. In diesem Falle wird der Magerbetrieb komplett unterdrückt. Der ZAH-Schwellwert ZAHMX sollte vorzugsweise 3 bis 15 und besonders bevorzugt 4 bis 6 betragen.

- Analog kann dauernder Magerbetrieb zugelassen werden, wenn der Zeitanteil des Homogenbetriebes relativ zum Magerbetrieb ZAH einen vorgebbaren unteren Schwellwert ZAHMN unterschreitet. Der Schwellwert ZAHMN soll vorzugsweise 0,02 bis 0,3 und besonders bevorzugt 0,02 bis 0,2 betragen. Der Schwellwert ZAHMN richtet sich nach der Bedatung des Homogen-Anpassungswertes HAW. Je niedriger der Homogen-Anpassungswert HAW liegt, desto höher ist der Schwellwert ZAHMN zu wählen.

Mit dem beschriebenen erfindungsgemäßen Verfahren kann vorteilhafterweise eine deutliche Verbrauchsminderung unter Einhaltung der vorgeschriebenen Emissionsgrenzwerte erzielt werden, da durch Betrachtung eines streckenbezogenen Mittels des Emissionsschwellwertes höhere Magerbetriebsanteile beim Betreiben des Verbrennungsmotors erzielt werden können.

Die erfindungsgemäße Aufgabe wird ferner durch eine Vorrichtung gelöst, die durch Mittel gekennzeichnet ist, mit denen die vorgenannten Verfahrensschritte durchführbar sind. Dabei umfassen die Mittel insbesondere eine Steuereinheit, in der ein Algorithmus zur Steuerung der Verfahrensschritte in digitaler Form hinterlegt ist. Diese Steuereinheit beziehungsweise der Algorithmus kann besonders vorteilhaft in einem Motorsteuergerät der Verbrennungskraftmaschine integriert sein. Gemäß einer vorteilhaften Ausgestaltung sind ferner Mittel vorgesehen, mit denen eine aktuelle Geschwindigkeit, eine Drehzahl und/oder eine Last des Fahrzeuges beziehungsweise des Verbrennungsmotors erfasst werden kann, um eine streckenbezogene $NO_X$-Rohemission zu ermitteln.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

Figur 1 schematisch eine Verbrennungskraftmaschine mit nachgeschalteter Abgasanlage;

Figur 2 einen typischen Verlauf einer Katalysatoraktivität eines $NO_X$-Speicherkatalysators in Abhängigkeit von seiner Temperatur und

Figur 3    ein Fließschema mit einem Verfahrensablauf gemäß dem erfindungsgemäßen Verfahren.

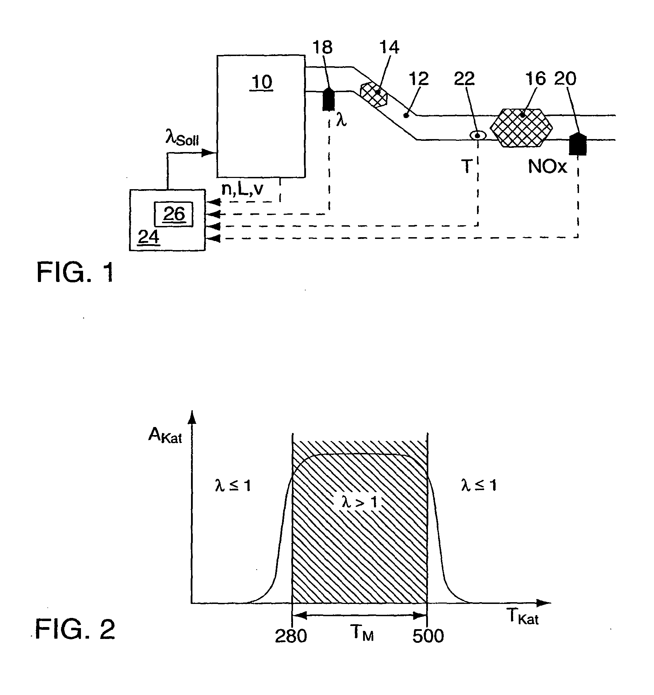

Figur 1 zeigt schematisch eine Verbrennungskraftmaschine 10 mit nachgeschalteter Abgasanlage. Von einer Verbrennungskraftmaschine 10, vorzugsweise einem magerlauffähigen oder direkteinspritzenden Ottomotor, erzeugtes Abgas wird durch einen Abgaskanal 12 geleitet, in dem ein Katalysatorsystem, bestehend aus einem Vorkatalysator 14 und einem $NO_x$-Speicherkatalysator 16 als Hauptkatalysator, angeordnet ist. Im Abgaskanal 12 sind ferner verschiedene Sensoren angeordnet, die eine Steuerung der Verbrennungskraftmaschine 10 ermöglichen. Insbesondere erfolgt eine Regelung eines der Verbrennungskraftmaschine 10 zuzuführenden Luft-Kraftstoff-Gemisches auf eine Lambda-Soll-Vorgabe $\lambda_{Soll}$ durch eine stromauf des Vorkatalysator 14 angeordnete Lambdasonde 18. Zudem erfolgt eine Überwachung einer $NO_x$-Emission ($NO_x$-Durchbruch) mit Hilfe eines stromab des $NO_x$-Speicherkatalysators 16 angeordneten $NO_x$-Sensors 20. Schließlich erfasst ein in Nähe des $NO_x$-Speicherkatalysators 16 angeordneter Temperatursensor 22 eine Abgastemperatur, aus welcher eine Temperatur des $NO_x$-Speicherkatalysators 16 abgeleitet werden kann. Alternativ kann die Temperatur des $NO_x$-Speicherkatalysators 16 auch in Abhängigkeit geeigneter Betriebsparameter der Verbrennungskraftmaschine 10 berechnet werden. Alle Sensorsignale $\lambda$, T, $NO_x$ sowie verschiedene Betriebsparameter der Verbrennungskraftmaschine 10, insbesondere eine Drehzahl n, eine Motorlast L und eine Fahrzeuggeschwindigkeit v, finden Eingang in ein Motorsteuergerät 24, das in Abhängigkeit dieser Daten einen Betriebsmodus der Verbrennungskraftmaschine 10 steuert. Insbesondere erfolgt eine Vorgabe eines zulässigen Betriebsmodus (Magermodus oder stöchiometrisch/fetter Betriebsmodus) durch das Motorsteuergerät 24. Das Motorsteuergerät 24 umfasst eine Steuereinheit 26, in der ein Algorithmus zur Bestimmung eines zulässigen Magertemperaturbereiches in Abhängigkeit einer aktuellen Rohemission mindestens einer Abgaskomponente, im vorliegenden Beispiel von $NO_x$, hinterlegt ist.

Figur 2 zeigt einen Verlauf einer Katalysatoraktivität $A_{Kat}$ des $NO_x$-Speicherkatalysators 16 in Abhängigkeit von seiner Katalysatortemperatur $T_{Kat}$. Es ist zu erkennen, dass die Katalysatoraktivität $A_{Kat}$ einen glockenförmigen Verlauf mit zentralem Plateaubereich aufweist. Bei niedrigen Katalysatortemperaturen $T_{Kat}$, insbesondere unterhalb von etwa 200 °C, laufen die $NO_x$-Einspeicher- und -Konvertierungsvorgänge mit so niedrigen Geschwindigkeiten ab, dass weder eine nennenswerte Einspeicherrate noch Reduktionsrate von $NO_x$ zu beobachten ist. Oberhalb des Arbeitstemperaturfensters, insbesondere oberhalb von etwa 550 °C, findet wegen der thermischen Instabilität von Nitrat, der Einspeicherform von $NO_x$, eine Dissoziation statt, so dass auch hier eine zu geringe Speicherfähigkeit des $NO_x$-Speicherkatalysators 16 vorliegt.

Der Magerbetrieb der Verbrennungskraftmaschine 10 wird erfindungsgemäß auch über einen festgelegten Magertemperaturbereich $T_M$, in dem der $NO_x$-Speicherkatalysator 16 eine ausreichend hohe Aktivität $A_{Kat}$ hinsichtlich der Speicherung und Konvertierung von $NO_x$ aufweist, hinaus zugelassen, wenn im streckenbezogenen Mittel ein vorgebbarer Emissionsschwellwert eingehalten wird, so dass dennoch strenge gesetzliche Emissionsgrenzwerte eingehalten werden können. Entsprechend der Europäischen Abgasnorm EU IV wird der Magerbetrieb typischerweise nur bei Katalysatortemperaturen $T_{Kat}$ des Speicherkatalysators 16 von zirka 280 bis 500 °C zugelassen, wobei dieser Magertemperaturbereich $T_M$ je nach Ausführung des Katalysators abweichen kann. Es wird daher in Abhängigkeit aktueller Betriebsparameter n, L, v der Verbrennungskraftmaschine 10 beziehungsweise des Fahrzeuges die streckenbezogene $NO_x$-Emission stromauf des $NO_x$-Speicherkatalysators 16 ermittelt.

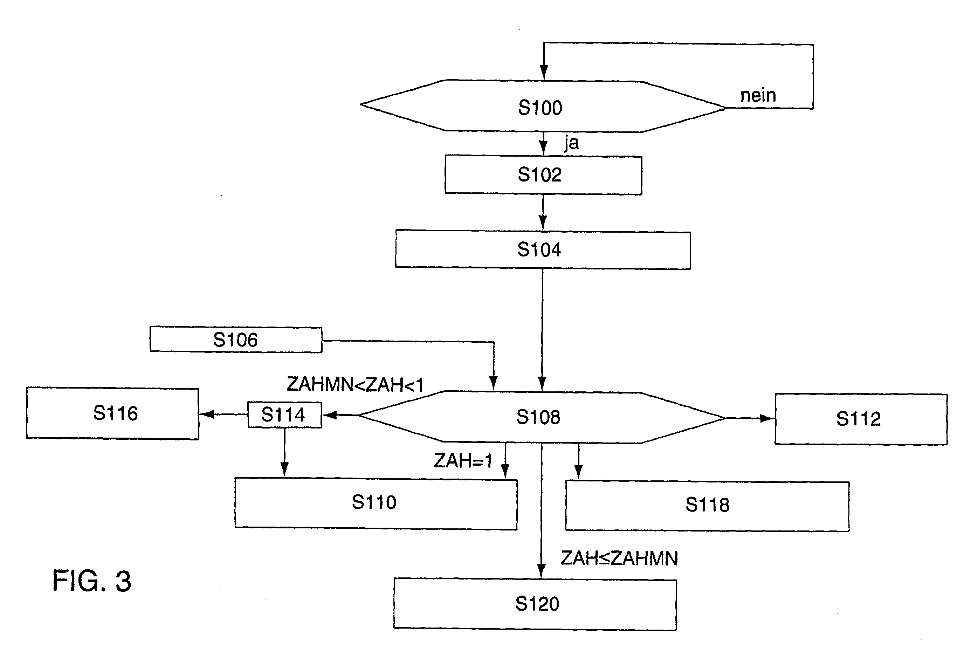

Der Ablauf des erfindungsgemäßen Verfahrens wird durch das in Figur 3 gezeigte Fließschema verdeutlicht. Ausgelöst wird das Verfahren durch eine Abfrage S100, ob die aktuelle Temperatur $T_{Kat}$ des $NO_x$-Speicherkatalysators 16 einen oberen Schwellwert überschritten oder einen unteren Schwellwert unterschritten hat, bei dem der Magertemperaturbereich $T_M$ verlassen wird. Ist dies nicht der Fall, kehrt die Routine zum Ausgangspunkt zurück. Ist hingegen die Temperatur $T_{Kat}$ des $NO_x$-Speicherkatalysators 16 größer als der obere Schwellwert oder kleiner als der untere Schwellwert, so erfolgt ein erster Schritt S102 des Verfahrens, in dem die aktuelle streckenbezogene $NO_x$-Emission NOXS, die wie voranstehend bei Figur 2 beschrieben ermittelt wird, durch einen vorgebbaren streckenbezogenen Emissionsschwellwert NOXMX dividiert wird. Von dem sich daraus ergebenden Faktor NOXS/NOXMX wird in einem zweiten Schritt S104 ein Wert HAW subtrahiert wird, der einen Homogen-Anpassungswert darstellt. Dieser liegt im Idealfall, das heißt 100 % $NO_x$-Konvertierung im Homogenbetrieb, bei genau 1 und im Realfall, das heißt unter Berücksichtigung suboptimaler Konvertierungsraten und kleinem $NO_x$-Schlupf bei Betriebsartenumschaltungen, bei 0,98...0,9. In ungünstigen Fällen kann dieser Wert auch noch niedriger, bis 0,5, liegen. Durch die Subtraktion im vorherigen Schritt S104 ergibt sich ein Wert ZAH., der für einen Zeitanteil des Homogenbetriebes relativ zum Magerbetrieb steht. In einem dritten parallelen Schritt S106 wird ein Mindest-Zeitraster MZR definiert, in dem zwischen Homogen- und Magerbetrieb gewechselt werden soll. Idealerweise wird hier eine Mindest-Zeit von 5 - 30 Sekunden, vorzugsweise von 8 - 20 Sekunden angesetzt. Anschließend erfolgt in einem vierten Schritt S108 die Prüfung, ob der Wert ZAH für den Zeitanteil des Homogenbetriebes relativ zum Magerbetrieb größer, gleich oder kleiner als 1 ist. Falls der Wert ZAH genau gleich 1 ist, wird in einem Schritt S110 genau im Mindest-Zeitraster MZR zwischen Homogen- und Magerbetrieb gewechselt. Sofern der Wert ZAH größer als 1 ist, wird gemäß Schritt S112 für die Dauer des Mindest-Zeitrasters MZR der Magerbetrieb freigegeben und anschließend für eine Zeitdauer MZR x ZAH der Homogenbetrieb vorgeschrieben. Ist der Wert ZAH kleiner als 1, so ist durch eine Weiche gemäß einem Schritt S114 die Möglichkeit gegeben, ebenfalls auf das Mindest-Zeitraster zwischen Homogen- und Magerbetrieb gemäß Schritt S110 zu wechseln oder für die Dauer des Mindest-Zeitrasters MZR den Homogenbetrieb in einem Schritt S116 vorzuschreiben und anschließend für die Zeitdauer MZR/ZAH den Magerbetrieb freizugeben. Wird ein vorgebbarer oberer ZAH-Schwellwert ZAHMX erreicht beziehungsweise überschritten, so wäre der Mageranteil so gering, dass keine nennenswerten Verbrauchsvorteile mehr erreicht werden könnten. Daher wird in diesem Falle in einem Schritt S118 der Magerbetrieb komplett unterdrückt. Der ZAH-Schwellwert ZAHMX soll vorzugsweise zwischen 3 und 15 und besonders bevorzugt zwischen 4 bis 6 liegen. Dementsprechend wird ein dauernder Magerbetrieb in einem Schritt S120 zugelassen, wenn der Wert ZAH einen vorgebbaren unteren Schwellwert ZAHMN unterschreitet, wobei ZAHMN vorzugsweise zwischen 0,02 und 0,3 und besonders bevorzugt zwischen 0,02 und 0,2 liegt. Der untere Schwellwert ZAHMN richtet sich nach der Bedatung von HAW. Je niedriger der Homogen-Anpassungswert HAW liegt, desto höher kann der untere Schwellwert ZAHMN gewählt werden.

**BEZUGSZEICHENLISTE**

| | |
|---|---|
| 10 | Verbrennungskraftmaschine |
| 12 | Abgaskanal |
| 14 | Vorkatalysator |
| 16 | $NO_X$-Speicherkatalysator |
| 18 | Lambdasonde |
| 20 | $NO_X$-Sensor |
| 22 | Temperatursensor |
| 24 | Motorsteuergerät |
| 26 | Steuereinheit |

| | |
|---|---|
| $\lambda$ | Luft-Kraftstoff-Verhältnis |
| $A_{Kat}$ | Katalysatoraktivität |
| L | Motorlast |
| n | Motordrehzahl |
| $T_{Kat}$ | Katalysatortemperatur |
| $T_M$ | Magertemperaturbereich |
| V | Fahrzeuggeschwindigkeit |

| | |
|---|---|
| HAW | Homogen-Anpassungswert |
| NOXS | streckenbezogene $NO_X$-Emission |
| NOXS/NOXMX | Faktor |
| HAW | Homogen-Anpassungswert |
| MZR | Mindest-Zeitraster |
| MZR x ZAH | Zeitdauer |
| ZAH | Zeitanteil des Homogenbetriebes relativ zum Magerbetrieb |
| ZAHMN | unterer ZAH-Schwellwert |
| ZAHMX | oberer ZAH-Schwellwert |

| | |
|---|---|
| S100 | Abfrage Temperatur des $NO_X$-Speicherkatalysators |
| S102 | Ermittlung des Faktors NOXS/NOXMX |
| S104 | Ermittlung des Wertes ZAH |
| S106 | Definition von MZR |
| S108 | Prüfung ZAH |
| S110 | Wechsel von Homogen- und Magerbetrieb im MZR |
| S112 | Vorgabe der Anteile von Mager- und Homogenbetrieb |
| S114 | Weiche |
| S116 | Vorgabe der Anteile von Mager- und Homogenbetrieb |
| S118 | Unterdrückung Magerbetrieb |
| S120 | Zulassung dauernder Magerbetrieb |

**Patentansprüche**

1. Verfahren zur Steuerung einer magerlauffähigen Verbrennungskraftmaschine (10) zum Antrieb eines Fahrzeuges mit mindestens einem nachgeschalteten Katalysator (14, 16), wobei ein Magerbetrieb der Verbrennungskraftmaschine (10) mit $\lambda > 1$ innerhalb eines zulässigen Magertemperaturbereiches ($T_M$) für eine Katalysatortemperatur des mindestens einen Katalysators (14, 16) zugelassen wird, **dadurch gekennzeichnet, dass** der Magerbetrieb der Verbrennungskraftmaschine (10) auch über den festgelegten Magertemperaturbereich ($T_M$) hinaus zumindest temporär zugelassen wird, wenn im streckenbezogenen Mittel zumindest ein Emissionsschwellwert eingehalten wird.

2. Verfahren nach Anspruch 1, **dadurch gekennzeichnet, dass** bei temporärer Zulassung der Überschreitung des Magertemperaturbereiches ($T_M$) Wechsel zwischen Mager- und Homogenbetrieb des Verbrennungsmotors (10) gegeben sind, deren Homogenanteile umso höher sind, je weiter die streckenbezogenen Emissionen vor dem Katalysator (14, 16) den Emissionsschwellwert überschreiten.

3. Verfahren nach Anspruch 1 oder 2, **dadurch gekennzeichnet, dass** eine aktuelle streckenbezogene Emission mindestens einer Abgaskomponente der Verbrennungskraftmaschine (10) ermittelt wird.

4. Verfahren nach Anspruch 3, **dadurch gekennzeichnet, dass** eine aktuelle streckenbezogene Emission gemessen oder in Abhängigkeit aktueller Betriebsparameter der Verbrennungskraftmaschine (10) ermittelt wird.

5. Verfahren nach Anspruch 4, **dadurch gekennzeichnet, dass** die zur Ermittlung der aktuellen Emission der mindestens einen Abgaskomponente verwendeten aktuellen Betriebsparameter der Verbrennungskraftmaschine (10) zumindest eine Fahrzeuggeschwindigkeit (v) und/oder eine Drehzahl (n) und/oder eine Last (L) sind.

6. Verfahren nach einem der Ansprüche 1 bis 5, **dadurch gekennzeichnet, dass** die mindestens eine Abgaskomponente Stickoxid ($NO_x$) und mindestens ein Katalysator (14, 16) ein $NO_x$-Speicherkatalysator (16) ist.

7. Verfahren nach einem der Ansprüche 1 bis 6, **dadurch gekennzeichnet, dass**

   - das Verfahren durch Überschreitung eines oberen Schwellwertes oder Unterschreitung eines unteren Schwellwertes für die Temperatur des $NO_x$-Speicherkatalysators initiiert wird,
   - die aktuelle streckenbezogene $NO_x$-Emission (NOXS) durch einen vorgebbaren streckenbezogenen Emissionsschwellwert (NOXMX) dividiert wird,
   - von dem so ermittelten Faktor (NOXS/NOXMX) ein Homogen-Anpassungswert (HAW) subtrahiert wird, wodurch sich ein Zeitanteil des Homogenbetriebes relativ zum Magerbetrieb (ZAH) ergibt,
   - zudem ein Mindest-Zeitraster (MZR) definiert wird, in dem zwischen den Betriebsarten gewechselt werden soll, und
   - anschließend geprüft wird, ob der Zeitanteil des Homogenbetriebes relativ zum Magerbetrieb (ZAH) größer, gleich oder kleiner als 1 ist,
   - sofern der Zeitanteil des Homogenbetriebes relativ zum Magerbetrieb (ZAH) genau gleich 1 ist, genau im Mindest-Zeitraster (MZR) zwischen Homogen- und Magerbetrieb gewechselt wird,
   - sofern der Zeitanteil des Homogenbetriebes relativ zum Magerbetrieb (ZAH) größer als 1 ist, für die Dauer des Mindest-Zeitrasters (MZR) der Magerbetrieb freigegeben und anschließend für die Zeitdauer (MZR x ZAH) der Homogenbetrieb vorgeschrieben wird, und
   - sofern der Zeitanteil des Homogenbetriebes relativ zum Magerbetrieb (ZAH) kleiner als 1 ist, ebenfalls genau im Mindest-Zeitraster zwischen Homogen- und Magerbetrieb gewechselt oder für die Dauer des Mindest-Zeitrasters (MZR) der Homogenbetrieb vorgeschrieben und anschließend für die Zeitdauer (MZR/ZAH) der Magerbetrieb freigegeben werden kann.

8. Verfahren nach Anspruch 7, **dadurch gekennzeichnet, dass** bei Überschreiten eines oberen ZAH-Schwellwertes (ZAHMX) der Magerbetrieb der Verbrennungskraftmaschine (10) unterdrückt wird.

9. Verfahren nach Anspruch 8, **dadurch gekennzeichnet, dass** der ZAH-Schwellwert (ZAHMX) 3 bis 15 beträgt.

10. Verfahren nach Anspruch 8, **dadurch gekennzeichnet, dass** der ZAH-Schwellwert (ZAHMX) 4 bis 6 beträgt.

11. Verfahren nach einem Ansprüche 7 bis 10, **dadurch gekennzeichnet, dass** dauernder Magerbetrieb der Verbrennungskraftmaschine (10) zugelassen wird, wenn der Zeitanteil des Homogenbetriebes relativ zum Magerbetrieb (ZAH) einen vorgebbaren unteren Schwellwert (ZAHMN) unterschreitet.

**12.** Verfahren nach Anspruch 11, **dadurch gekennzeichnet, dass** der Schwellwert (ZAHMN) 0,02 bis 0,3 beträgt.

**13.** Verfahren nach Anspruch 11, **dadurch gekennzeichnet, dass** der Schwellwert (ZAHMN) 0,02 bis 0,2 beträgt.

**14.** Verfahren nach einem der Ansprüche 7 bis 13, **dadurch gekennzeichnet, dass** der Homogenanpassungs-Wert (HAW) zwischen 1 und 0,5 liegt.

**15.** Verfahren nach einem der Ansprüche 7 bis 14, **dadurch gekennzeichnet, dass** das Mindest-Zeitraster (MZR) eine Mindest-Zeit von 5 bis 30 Sekunden aufweist.

**16.** Verfahren nach Anspruch 11, **dadurch gekennzeichnet, dass** das Mindest-Zeitraster (MZR) eine Mindest-Zeit von 8 bis 20 Sekunden aufweist.

**17.** Vorrichtung zur Steuerung einer magerlauffähigen Verbrennungskraftmaschine (10) nach dem erfindungsgemäßen Verfahren nach einem der Ansprüche 1 bis 16 zum Antrieb eines Fahrzeuges mit mindestens einem nachgeschalteten Katalysator (14, 16), wobei ein Magerbetrieb der Verbrennungskraftmaschine (10) mit $\lambda > 1$ innerhalb eines zulässigen Magertemperaturbereichs ($T_M$) für eine Katalysatortemperatur des mindestens einen Katalysators (14, 16) zulässig ist, **dadurch gekennzeichnet, dass** der Magerbetrieb der Verbrennungskraftmaschine (10) auch über den festgelegten Magerterriperaturbereich ($T_M$) hinaus zumindest temporär zugelassen wird, wenn im streckenbezogenen Mittel zumindest ein vorgebbarer Emissionsschwellwert eingehalten wird, wobei zur Durchführung des Verfahrens Mittel vorgesehen sind.

**18.** Vorrichtung nach Anspruch 17, **dadurch gekennzeichnet, dass** die Mittel eine Steuereinheit (26) umfassen, in der ein Algorithmus zur Steuerung der Verfahrensschritte gespeichert ist.

**19.** Vorrichtung nach Anspruch 18, **dadurch gekennzeichnet, dass** die Steuereinheit (26) in ein Motorsteuergerät (24) integriert ist.

**Claims**

**1.** Method for controlling an internal combustion engine (10) capable of lean running for driving a vehicle having at least one catalytic converter (14, 16) connected downstream, with a lean-burn mode of the internal combustion engine (10) with $\lambda > 1$ being permitted within a permissible lean-burn temperature range ($T_M$) for a converter temperature of the at least one catalytic converter (14, 16), **characterized in that** the lean-burn mode of the internal combustion engine (10) is also permitted beyond the defined lean-burn temperature range ($T_M$) at least temporarily if a distance-based average adheres to at least one emissions threshold value.

**2.** Method according to Claim 1, **characterized in that**, in the event of a temporary permission of the exceedance of the lean-burn temperature range ($T_M$), switches occur between the lean-burn and a homogeneous mode of the internal combustion engine (10), whose homogeneous proportions are higher the further the distance-based emissions upstream of the catalytic converter (14, 16) exceed the emissions threshold value.

**3.** Method according to Claim 1 or 2, **characterized in that** a present distance-based emission of at least one exhaust-gas component of the internal combustion engine (10) is determined.

**4.** Method according to Claim 3, **characterized in that** a present distance-based emission is measured or determined as a function of present operating parameters of the internal combustion engine (10).

**5.** Method according to Claim 4, **characterized in that** the present operating parameters of the internal combustion engine (10) used for determining the present emission of the at least one exhaust-gas component are at least one vehicle speed (v) and/or a rotational speed (n) and/or a load (L).

**6.** Method according to one of Claims 1 to 5, **characterized in that** the at least one exhaust-gas component is nitrogen oxide ($NO_x$) and at least one catalytic converter (14, 16) is an $NO_x$ storage catalytic converter (16).

7. Method according to one of Claims 1 to 6, **characterized in that**

- the method is initiated by the exceedance of an upper threshold value or the undershooting of a lower threshold value for the temperature of the $NO_x$ storage catalytic converter,
- the present distance-based $NO_x$ emission (NOXS) is divided by a predefinable distance-based emissions threshold value (NOXMX),
- a homogeneous-adaptation value (HAW) is subtracted from the factor (NOXS/NOXMX) which is determined in this way, thereby giving a time proportion of the homogeneous mode relative to the lean-burn mode (ZAH),
- in addition, a minimum time raster (MZR) is defined in which a switch should be made between the operating modes, and
- it is subsequently checked whether the time proportion of the homogeneous mode relative to the lean-burn mode (ZAH) is greater than, equal to or less than 1,
- if the time proportion of the homogeneous mode relative to the lean-burn mode (ZAH) is exactly equal to 1, a switch is made between the homogeneous and lean-burn mode in precisely the minimum time raster (MZR),
- if the time proportion of the homogeneous mode relative to the lean-burn mode (ZAH) is greater than 1, the lean-burn mode is enabled for the duration of the minimum time raster (MZR) and the homogeneous mode is subsequently prescribed for the time period (MZR x ZAH), and
- if the time proportion of the homogeneous mode relative to the lean-burn mode (ZAH) is less than 1, a switch is made between the homogeneous and lean-burn mode likewise in precisely the minimum time raster, or the homogeneous mode is prescribed for the duration of the minimum time raster (MZR) and the lean-burn mode can subsequently be enabled for the time period (MZR/ZAH).

8. Method according to Claim 7, **characterized in that**, in the event of an upper ZAH threshold value (ZAHMX) being exceeded, the lean-burn mode of the internal combustion engine (10) is suppressed.

9. Method according to Claim 8, **characterized in that** the ZAH threshold value (ZAHMX) is 3 to 15.

10. Method according to Claim 8, **characterized in that** the ZAH threshold value (ZAHMX) is 4 to 6.

11. Method according to one of Claims 7 to 10, **characterized in that** a continuous lean-burn operation of the internal combustion engine (10) is permitted if the time proportion of the homogeneous mode relative to the lean-burn mode (ZAH) undershoots a predefinable lower threshold value (ZAHMN).

12. Method according to Claim 11, **characterized in that** the threshold value (ZAHMN) is 0.02 to 0.3.

13. Method according to Claim 11, **characterized in that** the threshold value (ZAHMN) is 0.02 to 0.2.

14. Method according to one of Claims 7 to 13, **characterized in that** the homogeneous adaptation value (HAW) is between 1 and 0.5.

15. Method according to one of Claims 7 to 14, **characterized in that** the minimum time raster (MZR) has a minimum time of 5 to 30 seconds.

16. Method according to Claim 11, **characterized in that** the minimum time raster (MZR) has a minimum time of 8 to 20 seconds.

17. Device for controlling an internal combustion engine (10) capable of lean running as per the method according to the invention according to one of Claims 1 to 16 for driving a vehicle having at least one catalytic converter (14, 16) connected downstream, with a lean-burn mode of the internal combustion engine (10) with $\lambda > 1$ being permitted within a permissible lean-burn temperature range ($T_M$) for a converter temperature of the at least one catalytic converter (14, 16), **characterized in that** the lean-burn mode of the internal combustion engine (10) is also permitted beyond the defined lean-burn temperature range ($T_M$) at least temporarily if a distance-based average adheres to at least one predefinable emissions threshold value, with means being provided for carrying out the method.

18. Device according to Claim 17, **characterized in that** the means comprise a control unit (26) in which is stored an algorithm for controlling the method steps.

19. Device according to Claim 18, **characterized in that** the control unit (26) is integrated into an engine control unit (24).

**Revendications**

1. Procédé pour commander un moteur à combustion interne (10) capable de fonctionner avec un mélange pauvre, pour l'entraînement d'un véhicule avec au moins un catalyseur (14, 16) monté en aval, un fonctionnement avec un mélange pauvre du moteur à combustion interne (10) avec λ > 1 étant autorisé à l'intérieur d'une plage de température de mélange pauvre ($T_M$) admissible pour une température du catalyseur de l'au moins un catalyseur (14, 16), **caractérisé en ce que** le fonctionnement avec un mélange pauvre du moteur à combustion interne (10) est autorisé aussi au moins temporairement au-delà de la plage de température de mélange pauvre ($T_M$) fixée, lorsqu'au moins une valeur seuil d'émissions est respectée dans la moyenne rapportée à la distance.

2. Procédé selon la revendication 1, **caractérisé en ce que** lorsque le dépassement de la plage de température de mélange pauvre ($T_M$) est autorisé temporairement, des échanges entre le fonctionnement avec un mélange pauvre et un fonctionnement homogène du moteur à combustion interne (10) ont lieu, les proportions homogènes étant d'autant plus élevées que les émissions rapportées à la distance avant le catalyseur (14, 16) dépassent de beaucoup la valeur seuil d'émissions.

3. Procédé selon la revendication 1 ou 2, **caractérisé en ce que** l'on détermine une émission actuelle rapportée à la distance d'au moins un composant du gaz d'échappement du moteur à combustion interne (10).

4. Procédé selon la revendication 3, **caractérisé en ce que** l'on mesure une émission actuelle rapportée à la distance ou on la détermine en fonction de paramètres de fonctionnement actuels du moteur à combustion interne (10).

5. Procédé selon la revendication 4, **caractérisé en ce que** les paramètres actuels de fonctionnement du moteur à combustion interne (10) utilisés pour déterminer l'émission actuelle de l'au moins un composant du gaz d'échappement sont au moins une vitesse du véhicule (v) et/ou une vitesse de moteur (n) et/ou une charge (L).

6. Procédé selon l'une quelconque des revendications 1 à 5, **caractérisé en ce que** l'au moins un composant du gaz d'échappement est l'oxyde d'azote (NOx) et au moins un catalyseur (14, 16) est un catalyseur à accumulation de NOx (16).

7. Procédé selon l'une quelconque des revendications 1 à 6, **caractérisé en ce que**

 - le procédé est amorcé par le dépassement d'une valeur seuil supérieure ou si une valeur seuil inférieure n'est pas atteinte, pour la température du catalyseur à accumulation de NOx,
 - l'émission de NOx actuelle rapportée à la distance (NOXS) est divisée par une valeur seuil d'émissions (NOXMX) rapportée à la distance et prédéfinissable,
 - on soustrait du facteur ainsi déterminé (NOXS/NOXMX) une valeur d'adaptation homogène (HAW), de sorte que l'on obtient une proportion temporelle du fonctionnement homogène par rapport au fonctionnement avec un mélange pauvre (ZAH),
 - en outre, on définit une trame temporelle minimale (MZR) dans laquelle on doit alterner entre les types de fonctionnement, et
 - ensuite, on vérifie si la proportion temporelle du fonctionnement homogène par rapport au fonctionnement avec un mélange pauvre (ZAH) est supérieure, égale, ou inférieure à 1,
 - si la proportion temporelle du fonctionnement homogène par rapport au fonctionnement avec un mélange pauvre (ZAH) est exactement égale à 1, on alterne exactement dans la trame temporelle minimale (MZR) entre le fonctionnement homogène et le fonctionnement avec un mélange pauvre,
 - si la proportion temporelle du fonctionnement homogène par rapport au fonctionnement avec un mélange pauvre (ZAH) est supérieure à 1, pendant la durée de la trame temporelle minimale (MZR), on autorise le fonctionnement avec un mélange pauvre et ensuite on impose le fonctionnement homogène pendant la durée (MZR x ZAH), et
 - si la proportion temporelle du fonctionnement homogène par rapport au fonctionnement avec un mélange pauvre (ZAH) est inférieure à 1, on alterne aussi exactement dans la trame temporelle minimale entre le fonctionnement homogène et le fonctionnement avec un mélange pauvre, ou l'on impose le fonctionnement homogène pendant la durée de la trame temporelle minimale (MZR) et ensuite on peut autoriser le fonctionnement avec un mélange pauvre pendant la durée (M2R/2AH).

8. Procédé selon la revendication 7, **caractérisé en ce que** dans le cas d'un dépassement d'une valeur seuil supérieure de ZAH (ZAHMX), le fonctionnement avec un mélange pauvre du moteur à combustion interne (10) est supprimé.

9.   Procédé selon la revendication 8, **caractérisé en ce que** la valeur seuil de ZAH (ZAHMX) vaut 3 à 15.

10.  Procédé selon la revendication 8, **caractérisé en ce que** la valeur seuil de ZAH (ZAHMX) vaut 4 à 6.

11.  Procédé selon l'une quelconque des revendications 7 à 10, **caractérisé en ce que** l'on autorise un fonctionnement durable avec un mélange pauvre du moteur à combustion interne (10) lorsque la proportion temporelle du fonctionnement homogène par rapport au fonctionnement avec un mélange pauvre (ZAH) est inférieure à une valeur seuil inférieure prédéfinissable (ZAHMN).

12.  Procédé selon la revendication 11, **caractérisé en ce que** la valeur seuil (ZAHMN) vaut 0,02 à 0,3.

13.  Procédé selon la revendication 11, **caractérisé en ce que** la valeur seuil (ZAHMN) vaut 0,02 à 0,2.

14.  Procédé selon l'une quelconque des revendications 7 à 13, **caractérisé en ce que** la valeur d'adaptation homogène (HAW) est comprise entre 1 et 0,5.

15.  Procédé selon l'une quelconque des revendications 7 à 14, **caractérisé en ce que** la trame temporelle minimale (MZR) présente une durée minimale de 5 à 30 secondes.

16.  Procédé selon la revendication 11, **caractérisé en ce que** la trame temporelle minimale (MZR) présente une durée minimale de 8 à 20 secondes.

17.  Dispositif pour commander un moteur à combustion interne (10) capable de fonctionner avec un mélange pauvre selon le procédé selon l'invention selon l'une quelconque des revendications 1 à 16, pour entraîner un véhicule avec au moins un catalyseur (14, 16) monté en aval, un fonctionnement avec un mélange pauvre du moteur à combustion interne (10), avec $\lambda > 1$ étant autorisé à l'intérieur d'une plage de température de mélange pauvre ($T_M$) admissible pour une température du catalyseur de l'au moins un catalyseur (14, 16), **caractérisé en ce que** le fonctionnement avec un mélange pauvre du moteur à combustion interne (10) est autorisé aussi au moins temporairement au-delà de la plage de température de mélange pauvre ($T_M$) fixée, lorsqu'au moins une valeur seuil d'émissions prédéfinissable est respectée dans la moyenne rapportée à la distance, des moyens pour la mise en oeuvre du procédé étant prévus.

18.  Dispositif selon la revendication 17, **caractérisé en ce que** les moyens comprennent une unité de commande (26) dans laquelle est stocké un algorithme pour la commande des étapes du procédé.

19.  Dispositif selon la revendication 18, **caractérisé en ce que** l'unité de commande (26) est intégrée dans un appareil de commande du moteur (24).

FIG. 1

FIG. 2

FIG. 3

**EP 1 411 231 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10152670